# EUROPÄISCHE PATENTSCHRIFT

(11) **EP 1 493 067 B1**
(45) Veröffentlichungstag und Bekanntmachung des Hinweises auf die Patenterteilung: **13.09.2006**
(21) Anmeldenummer: 03722264.3
(22) Anmeldetag: 07.04.2003
(51) Int. Cl.: G05B 19/042

(54) **VERFAHREN ZUM PROJEKTIEREN UND/ODER BETREIBEN EINER AUTOMATISIERUNGSEINRICHTUNG**
METHOD FOR PROJECTING AND/OR OPERATING AN AUTOMATION DEVICE
PROCEDE DE PROJECTION ET/OU D'UTILISATION D'UN SYSTEME D'AUTOMATISATION

(30) Priorität: 05.04.2002 DE 10215121
(43) Veröffentlichungstag der Anmeldung: 05.01.2005
(73) Patentinhaber: SIEMENS AKTIENGESELLSCHAFT, 80333 München (DE)
(72) Erfinder: BECKER, Peter, 76571 Gaggenau (DE); RENSCHLER, Albert, 76275 Ettlingen (DE)
(86) Internationale Anmeldenummer: PCT/DE2003/001137
(87) Internationale Veröffentlichungsnummer: WO 2003/085465

(56) Entgegenhaltungen:
- EP-A- 0 807 887
- EP-A- 1 199 846
- WO-A-00/69116
- WO-A-94/15299
- PROFIBUS: "Brochure No. 4.002-FR" 1. September 2001 (2001-09-01) , PROFIBUS INTERNATIONAL , WWW.PROFIBUS.COM XP002252676 das ganze Dokument
- SIEMENS: "Katalog ST70, Kapiteln 4 und 6" 2001 XP002252674 in der Anmeldung erwähnt Seite 6.1 -Seite 6.4
- SIEMENS: "Katalog ST PCS 7, Kapitel 1" 2001 XP002252675 in der Anmeldung erwähnt das ganze Dokument

## Beschreibung

Die Erfindung betrifft ein Verfahren zum Projektieren und/oder Betreiben einer Automatisierungseinrichtung gemäß dem Oberbegriff des Anspruchs 1. Darüber hinaus betrifft die Erfindung ein Engineeringsystem gemäß Oberbegriff des Anspruchs 3 und ferner eine Automatisierungseinrichtung gemäß dem Oberbegriff des Anspruchs 5.

Aus dem Siemens-Katalog ST 70, Kapitel 6, Ausgabe 2001 ist eine Automatisierungseinrichtung mit einer so genannten "Dezentralen Peripherie" bekannt. Diese "Dezentrale Peripherie" ist für dezentrale Lösungen von Automatisierungsaufgaben im Bereich der Fertigungs-, der Prozess- sowie Verfahrenstechnik vorgesehen und umfasst gewöhnlich unterschiedliche, mit mehreren Slave-Baugruppen versehene Peripheriegeräte, die über einen Bus mit einer Master-Einheit verbunden sind. Dabei ist die Master-Einheit gewöhnlich eine Master-Baugruppe, die Bestandteil einer mit mindestens einer CPU- und weiteren Funktionsbaugruppen versehenen leistungsstarken speicherprogrammierbaren Steuerung zur Lösung komplexerer Automatisierungsaufgaben ist.
An die Slave-Baugruppen einer Slave-Einheit sind Aktoren und/oder Sensoren anschließbar, wobei von den Sensoren übermittelte Prozessperipherie-Eingangsdaten in den Slave-Einheiten hinterlegbar sind und wobei den Aktoren von den Slave-Einheiten Prozessperipherie-Ausgangsdaten zuführbar sind, welche die Master-Einheit den Slave-Einheiten übermittelt. Eine wesentliche Aufgabe der Master-Einheit besteht sowohl darin, die Prozessperipherie-Eingangsdaten als Abbild einer übergeordneten Verarbeitungseinheit einer speicherprogrammierbaren Steuerung zu übermitteln, als auch darin, das Abbild der Prozessperipherie-Ausgangsdaten, welches die übergeordnete Verarbeitungseinheit der Master-Einheit zuführt, zu verarbeiten und den Slave-Einheiten als Prozessperipherie-Ausgangsdaten zu übertragen. Die übergeordnete Verarbeitungseinheit bearbeitet das Abbild der Prozessperipherie-Eingangsdaten und das Abbild der Prozessperipherie-Ausgangsdaten zyklisch während eines Bearbeitungs-Zeitintervalls, wobei dieses Bearbeitungs-Zeitintervall (Bearbeitungszyklus) im Wesentlichen mit einem Masterzugriffs-Zeitintervall (Masterzyklus) der Master-Einheit abgestimmt ist. Während dieses Masterzugriffs-Zeitintervalls greift die Master-Einheit während eines Steuerbetriebs lesend und/oder schreibend auf alle am Bus angeschlossenen Slave-Einheiten zu. Dabei übermittelt die Master-Einheit zyklisch jeder Slave-Einheit die den jeweiligen Slave-Einheiten zugehörigen Prozessperipherie-Ausgangsdaten, wobei das Masterzugriffs-Zeitintervall im Wesentlichen durch die Anzahl der an den Bus angeschlossenen Slave-Einheiten bestimmt ist. Als Antwort auf die Übermittlung der Prozessperipherie-Ausgangsdaten greift jede Slave-Einheit während eines jeweils slave-spezifischen Slavezugriffs-Zeitintervalls schreibend auf den Bus zu, wodurch jede Slave-Einheit ihre Prozessperipherie-Ausgangsdaten der Master-Einheit übermittelt. Die Länge des Masterzugriffs-Zeitintervalls ist im Wesentlichen abhängig von der Anzahl der an die Master-Einheit angeschlossenen Slave-Einheiten, die jeweils ihr zugehöriges Slavezugriffs-Zeitintervall selbst überwachen. Für den Fall, dass auf eine Slave-Einheit innerhalb ihres Slavezugriffs-Zeitintervalls nicht zugegriffen wird, was darauf hinweist, dass Prozess-Peripherieausgänge dieser Slave-Einheit nicht mehr angesteuert werden, schaltet diese Slave-Einheit ihre Prozess-Peripherieausgänge in einen sicheren Zustand.

Die Anzahl der an die Master-Einheit anschließbaren Slave-Einheiten ist z. B. durch ein aus dem Siemens-Katalog ST PCS 7, Kapitel 1, Ausgabe 2001 bekanntes Engineeringsystem projektierbar, wobei die Anzahl der zu projektierenden Slave-Einheiten an die zu lösende Steueraufgabe angepasst wird.

Es kann nun vorkommen, dass z. B. aufgrund von Änderungen im Hinblick auf die zu lösende Steueraufgabe die Automatisierungseinrichtung um eine weitere Slave-Einheit zu ergänzen ist. Dies bedeutet, dass diese Slave-Einheit nachprojektiert werden muss, damit das Masterzugriffs-Zeitintervall und die jeweiligen Slavezugriffs-Zeitintervalle entsprechend verlängert werden. Dies ist aufwendig, zumal es erforderlich ist, die neue Konfiguration vor einem Steuerbetrieb zu testen.

Beispiele für ähnliche Automatisierungseinrichtungen sind aus WO 00/69116 A2, EP 0 807 887 A2, WO 94/15299 A1 und EP 1 199 846 A1 bekannt. Eine Beschreibung des PROFIBUS-Protokoll ist in der Schrift PROFIBUS Brochure - No. 4.002-FR, September 1999 zu finden.

Der vorliegenden Erfindung liegt die Aufgabe zugrunde, ein Verfahren zum Projektieren und/oder Betreiben einer Automatisierungseinrichtung der eingangs genannten Art zu schaffen, welches den Projektierungsaufwand im Hinblick auf eine mögliche Erweiterung der Automatisierungseinrichtung verringert. Darüber hinaus ist ein Engineeringsystem anzugeben, welches die Durchführung des Verfahrens im Hinblick auf die Projektierung einer Automatisierungseinrichtung ermöglicht. Ferner ist eine Automatisierungseinrichtung zu schaffen, welche für den Steuerbetrieb ohne Neuprojektierung im Hinblick auf das Master-Zugriffsintervall und im Hinblick auf die Slave-Zugriffsintervalle durch weitere Slave-Einheiten erweiterbar ist.

Diese Aufgabe wird im Hinblick auf das Verfahren durch die im kennzeichnenden Teil des Anspruchs 1, im Hinblick auf das Engineeringsystem durch die im kennzeichnenden Teil des Anspruchs 3 sowie im Hinblick auf die Automatisierungseinrichtung durch die im kennzeichnenden Teil des Anspruchs 5 angegebenen Maßnahmen gelöst.

Vorteilhaft ist, dass durch die Projektierung mindestens einer "Reserve-Slave-Einheit" sowohl das Masterzugriffs-Zeitintervall und die jeweiligen Slavezugriffs-Zeitintervalle für eine eventuelle Erweiterung der Automatisierungseinrichtung um eine weitere Slave-Einheit vorbereitet sind. Für den Fall, dass die Automatisierungseinrichtung tatsächlich um eine Slave-Einheit erweitert wird, geschieht dies rückwirkungsfrei, d. h., es ergeben sich keine Rückwirkungen im Hinblick auf das Masterzugriffs-Zeitintervall und die jeweiligen Slavezugriffs-Zeitintervalle, eine Neuprojektierung und ein Test der um die weitere Slave-Einheit ergänzten Automatisierungseinrichtung ist nicht erforderlich.

Anhand der Zeichnung, in der ein Ausführungsbeispiel der Erfindung veranschaulicht ist, werden im Folgenden die Erfindung sowie Ergänzungen und Weiterbildungen näher beschrieben und erläutert.

Es zeigen:
Figur 1 eine Bedieneroberfläche eines Engineeringsystems und
Figur 2 eine projektierte Automatisierungseinrichtung.

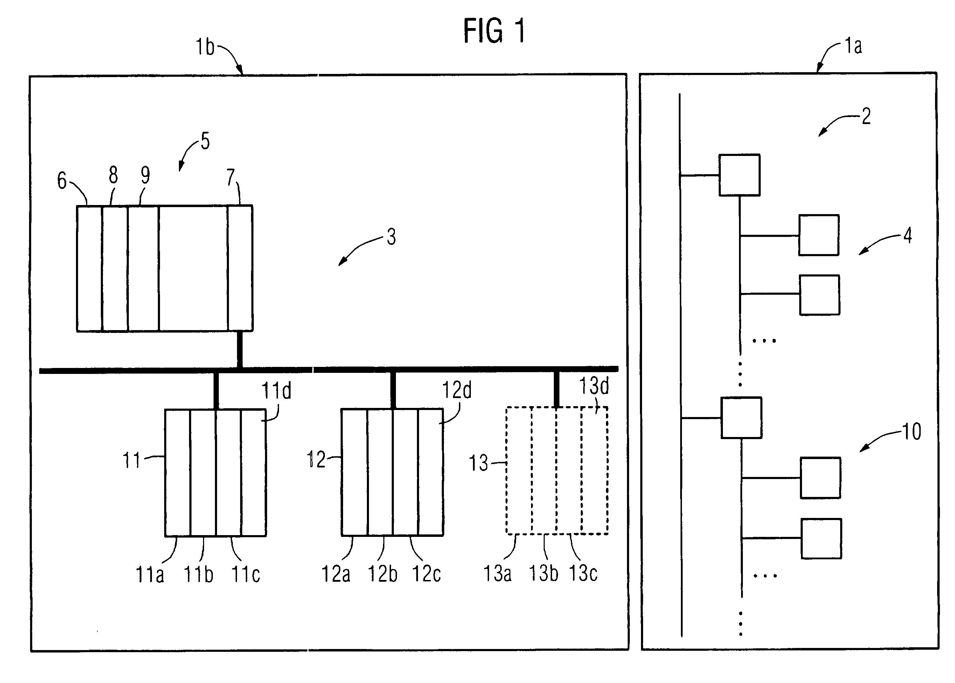

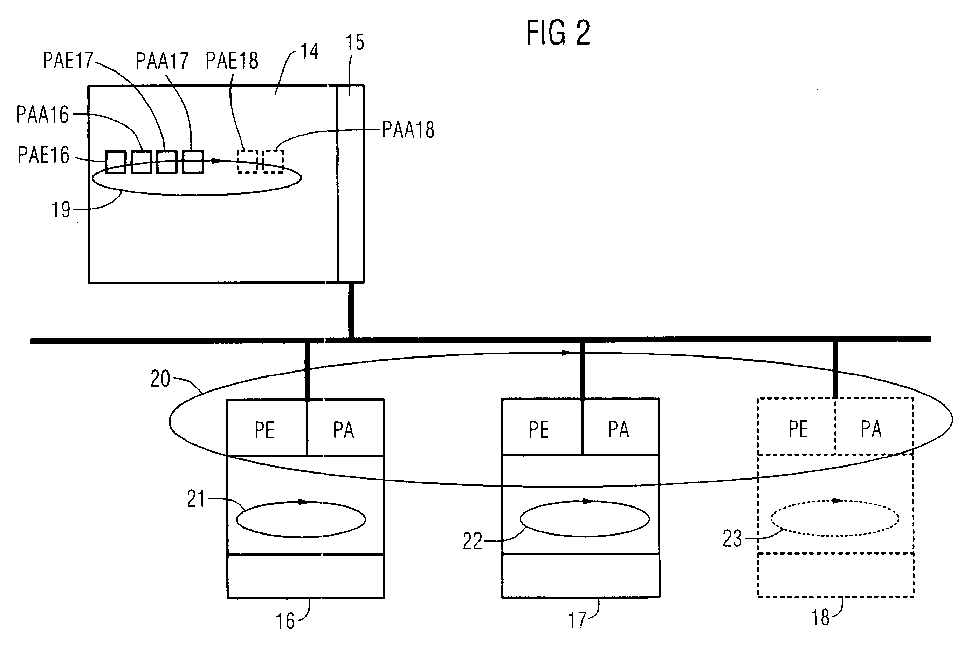

In Figur 1 sind mit 1a, 1b zwei Fenster einer Bedieneroberfläche einer Anzeigeeinheit eines Engineeringsystems bezeichnet, von denen das Fenster 1a zur Darstellung einer Hardware-Bibliothek 2 einer Automatisierungseinrichtung und das Fenster 1b zur Darstellung einer aktuell projektierten Hardware einer Automatisierungseinrichtung vorgesehen ist. Die Hardware-Bibliothek 2 weist Projektierungsdaten für Baugruppen einer speicherprogrammierbaren Steuerung, z. B. Baugruppen in Form von CPU-Baugruppen, Kommunikationsbaugruppen, Digitalein- und/oder -ausgabe-Baugruppen, sowie Projektierungsdaten für Baugruppen von Peripheriegeräten und Bussysteme mit dazugehörigen Busanschaltungen auf. Die Projektierung kann in der Art und Weise bewirkt werden, dass ein Bediener mittels Drag & Drop eine Hardware-Komponente mit einem Bedienelement in Form einer Maus aus dem Fenster 1a auswählt, in das Fenster 1b kopiert und dort die Komponenten entsprechend der zu lösenden Steueraufgabe miteinander verbindet. Im gezeigten Ausführungsbeispiel ist angenommen, dass aus einem Verzeichnis 4 der Hardware-Bibliothek 2 eine speicherprogrammierbare Steuerung 5 mit einer CPU-Baugruppe 6, mit einer Master-Einheit 7 und zwei weiteren Baugruppen 8, 9 ausgewählt ist. Die Master-Einheit braucht selbstverständlich nicht Teil der speicherprogrammierbaren Steuerung 5 zu sein, sondern kann als Bestandteil eines mehrere Baugruppen aufweisenden Zentralgerätes ausgewählt werden, welches über einen Bus mit einer speicherprogrammierbaren Steuerung verbunden ist. Ferner ist angenommen, dass aus einem Verzeichnis 10 der Hardware-Bibliothek 2 eine erste, eine zweite und eine dritte Slave-Einheit 11, 12, 13 ausgewählt sind, welche mehrere aus der Hardware-Bibliothek 2 auswählbare Slave-Baugruppen 11a ... 11d, 12a ... 12d, 13a ... 13d aufweisen und welche über eine ebenfalls aus der Hardware-Bibliothek 2 ausgewählte Busverbindung mit der Master-Einheit 7 verbunden sind. Die Master-Einheit 7, die Slave-Einheiten 11, 12, 13 sowie die Busverbindung zur Kopplung der Einheiten sind Bestandteile von dezentralen Peripheriegeräten, wobei die Slave-Einheiten 11, 12, 13 gleiche oder unterschiedliche Funktionalitäten aufweisen können. Das Engineeringsystem ist derart ausgebildet, dass durch einen Bediener Reserve-Slave-Einheiten mit diesen Einheiten zugeordneten Nutzdatenbereichen projektierbar sind. Diese Reserve-Slave-Einheiten sind aus der Hardware-Bibliothek 2 auswählbar und in der Darstellung im Fenster 1b besonders gekennzeichnet. Im vorliegenden Beispiel ist die Slave-Einheit 13 als Reserve-Slave-Einheit durch eine gestrichelte Linie gekennzeichnet, wobei für diese projektierte Reserve-Slave-Einheit die Automatisierungseinrichtung aufgrund von Änderungen einer zu lösenden Steueraufgabe mit einer Slave-Einheit beliebiger Funktionalität erweitert wird. Durch die projektierten Master- und Slave-Einheiten 7, 11, 12, 13 wird sowohl ein Masterzugriffs-Zeitintervall definiert, während dessen in einem Steuerbetrieb der Automatisierungseinrichtung die Master-Einheit lesend und/oder schreibend auf den Bus zugreift, als auch für jede Slave-Einheit ein Slavezugriffs-Zeitintervall, während dessen in dem Steuerbetrieb der Automatisierungseinrichtung die jeweilige Slave-Einheit lesend und/oder schreibend auf den Bus zugreift.
Es wird dazu auf Figur 2 verwiesen, in welcher eine projektierte Automatisierungseinrichtung dargestellt ist. Bestandteile dieser projektierten Automatisierungseinrichtung zur Steuerung eines technischen Prozesses sind eine übergeordnete CPU-Einheit 14, eine Master-Einheit 15 und zwei Slave-Einheiten 16, 17. Die Automatisierungseinrichtung ist mit einer weiteren Slave-Einheit 18 erweiterbar, was in der Zeichnung gestrichelt dargestellt ist, da ein Bediener während der Projektierung der Automatisierungseinrichtung (Figur 1) eine Reserve-Slave-Einheit für eine eventuell vorzunehmende Erweiterung der Automatisierungseinrichtung vorgesehen hat. Während eines Bearbeitungs-Zeitintervalls 19 liest die übergeordnete CPU-Einheit 14 zunächst Abbilder der Prozessperipherie-Eingangsdaten PAE16, PAE17 von der Master-Einheit 15 ein, verarbeitet diese zu Prozessperipherie-Ausgangsdaten PAA16, PAA17 und übermittelt schließlich diese Ausgangsdaten der Master-Einheit 15. Dabei ist das Bearbeitungs-Zeitintervall 19 um eine Verarbeitungszeit zur Verarbeitung des Abbildes der Prozessperipherie-Eingangsdaten der projektierten Reserve-Slave-Einheit 18 verlängert, was in der Zeichnung durch die gestrichelt eingezeichneten Quadrate mit den Bezugszeichen PAE18 bzw. PAA18 dargestellt ist. Aufgrund der von der übergeordneten CPU-Einheit 14 der Master-Einheit 15 zugeführten Abbilder der Prozessperipherie-Ausgangsdaten übermittelt die Master-Einheit 15 während eines Masterzugriffs-Zeitintervalls 20 den Slave-Einheiten 16, 17 Prozessperipherie-Ausgangsdaten PA, wobei das Masterzugriffs-Zeitintervall 20 um einen Schreibzugriff auf die projektierte Slave-Einheit 18 verlängert ist. In der beschriebenen Art und Weise ist auch zum Einlesen der Prozessperipherie-Eingangsdaten PE, d. h. während eines Lesezugriffs der Master-Einheit 15 auf die Slave-Einheiten 16, 17, das Masterzugriffs-Zeitintervall um den Lesezugriff auf die Slave-Einheit 18 verlängert.
Im Steuerbetrieb der Automatisierungseinrichtung wird also sowohl während des Schreib- als auch während des Lesezugriffs davon ausgegangen, dass Prozessperipherie-Eingangsdaten und Prozessperipherie-Ausgangsdaten der lediglich projektierten Slave-Einheit vorhanden und zu bearbeiten sind.

Die Slave-Einheiten 16, 17 überwachen während des Steuerbetriebs jeweils ihr zugehöriges Slavezugriffs-Zeitintervall 21, 22 selbst. Für den Fall, dass z. B. innerhalb der Buszugriffszeit 21 der Slave-Einheit 16 auf die Slave-Einheit 16 nicht zugegriffen wird, was darauf hinweist, dass Prozess-Peripherieausgänge dieser Slave-Einheit 16 nicht mehr angesteuert werden, schaltet diese Slave-Einheit 16 ihre Prozess-Peripherieausgänge in einen sicheren Zustand. Im vorliegenden Beispiel ist das jeweilige Slavezugriffs-Zeitintervall 21, 22 der Slave-Einheiten 16, 17 verlängert, was aufgrund der projektierten Slave-Einheit 18, des damit projektierten Slavezugriffs-Zeitintervalls 23 und des dadurch verlängerten Masterzugriffs-Zeitintervalls 20 erforderlich ist.

Durch die Projektierung der Reserve-Slave-Einheit 18 werden sowohl das Masterzugriffs-Zeitintervall, die jeweiligen Slavezugriffs-Zeitintervalle als auch das Bearbeitungs-Zeitintervall der übergeordneten CPU-Einheit 14 für eine eventuelle Erweiterung der Automatisierungseinrichtung mit der Slave-Einheit 18 vorbereitet. Für den Fall, dass die Automatisierungseinrichtung tatsächlich um die Slave-Einheit erweitert wird, geschieht dies rückwirkungsfrei, d. h., es ergeben sich keine Rückwirkungen im Hinblick sowohl auf das Masterzugriffs-Zeitintervall und die jeweiligen Slavezugriffs-Zeitintervalle als für das Bearbeitungs-Zeitintervall der übergeordneten CPU-Einheit 14, eine Neuprojektierung und ein Test der um die weitere Slave-Einheit 18 ergänzten Automatisierungseinrichtung ist nicht erforderlich. Selbstverständlich ist es möglich, mehrere Reserve-Slave-Einheiten zu projektieren, die als "neutrale" Einheiten projektiert sind. Dies bedeutet, die Automatisierungseinrichtung ist für den Steuerbetrieb mit Slave-Einheiten beliebiger Funktionalität (Typ) erweiterbar, wodurch eine Anpassung an eine Änderung der zu lösenden Steueraufgabe leicht möglich ist.

## Patentansprüche

1. Verfahren zum Projektieren und/oder Betreiben einer Automatisierungseinrichtung, welche in einem Steuerbetrieb eine Master-Einheit (15) und mindestens eine mit der Master-Einheit (15) über einen Bus verbindbare Slave-Einheit (16, 17) umfasst,
- wobei während einer Projektierungsphase die Anzahl der Slave-Einheiten (11, 12, 13; 16, 17, 18) projektierbar ist, wodurch
- ein Masterzugriffs-Zeitintervall (20), während dessen im Steuerbetrieb der Automatisierungseinrichtung die Master-Einheit (15) lesend und/oder schreibend auf den Bus zugreift, und
- für jede Slave-Einheit ein Slavezugriffs-Zeitintervall (21, 22, 23), während dessen im Steuerbetrieb der Automatisierungseinrichtung die Slave-Einheit lesend und/oder schreibend; auf den Bus zugreift,
definiert sind, und
- wobei zusätzlich zu den für den aktuellen Steuerbetrieb erforderlichen projektierten Slave-Einheiten mindestens eine weitere Slave-Einheit (13; 18) projektierbar ist, wodurch die Automatisierungseinrichtung für den Steuerbetrieb ohne Neuprojektierung mit der weiteren Slave-Einheit (18) erweiterbar ist,
**dadurch gekennzeichnet, dass** das Masterzugriffs-Zeitintervall (20) und die jeweiligen Slave-Zugriffs-Zeitintervalle (21, 22, 23) für eine eventuelle Erweiterung der Automatisierungseinrichtung mit der weiteren Slave-Einhieit (13; 18) vorbereitet werden.

2. Verfahren nach Anspruch 1, **dadurch gekennzeichnet, dass** die Anzahl der Slave-Einheiten menügesteuert projektierbar ist.

3. Engineeringsystem zum Projektieren einer Automatisierungseinrichtung, welche in einem Steuerbetrieb eine Master-Einheit und mindestens eine mit der Master-Einheit über einen Bus verbindbare Slave-Einheit umfasst,
- wobei während einer Projektierungsphase durch das Engineeringsystem die Art und/oder die Anzahl der Slave-Einheiten projektierbar ist, wodurch
- ein Masterzugriffs-Zeitintervall, während dessen im Steuerbetrieb der Automatisierungseinrichtung die Master-Einheit lesend und/oder schreibend auf den Bus zugreifen kann, und
- für jede Slave-Einheit ein slavezugriffs-Zeitintervall (21, 22, 23), während dessen im Steuerbetrieb der Automatisierungseinrichtung die Slave-Einheit lesend und/oder schreibend auf den Bus Zugreifen kann,
definiert sind, und
- wobei zusätzlich zu den für den aktuellen Steuerbetrieb erforderlichen projektierten Slave-Einheiten mindestens eine weitere Slave-Einheit projektierbar ist, wodurch die Automatisierungseinrichtung für den Steuerbetrieb ohne Neuprojektierung mit der weiteren Slave-Einheit (18) erweiterbar ist,
**dadurch gekennzeichnet, dass** durch das Engineeringsystem das Masterzugriffs-Zeitintervall (20) und die jeweiligen Slave-Zugriffs-Zeitintervalle (21, 22, 23) für eine eventuelle Erweiterung der Automatisierungseinrichtung mit der weiteren Slave-Einheit (13; 18) vorbereitet sind.

4. Engineeringsystem nach Anspruch 3, **dadurch gekennzeichnet, dass** die Anzahl der Slave-Einheiten durch das Engineeringsystem menügesteuert projektierbar ist.

5. Automatisierungseinrichtung, welche eine Master-Einheit und mindestens eine mit der Master-Einheit über einen Bus verbindbare Slave-Einheit umfasst,
- wobei während einer Projektierungsphase die Anzahl der Slave-Einheiten projektierbar ist, wodurch
- ein Master-Zugriffs-Zeitintervall (20), während dessen im Steuerbetrieb der Automatisierungseinrichtung die Master-Einheit lesend und/oder schreibend auf den Bus zugreifen Kann, und
- für jede Slave-Einheit ein Slavezugriffs-Zeitintervall (21, 22, 23), während dessen im Steuerbetrieb der Automatisierungseinrichtung die Slave-Einheit lesend und/oder schreibend auf den Bus zugreifen kann,
definiert sind, und
- wobei zusätzlich zu den für den aktuellen Steuerbetrieb erforderlichen projektierten Slave-Einheiten mindestens eine weitere Slave-Einheit projektiert ist, wodurch die Automatisierungseinrichtung für den Steuerbetrieb ohne Neuprojektierung mit der weiteren Slave-Einheit (18) erweiterbar ist,
**dadurch gekennzeichnet, dass** das Masterzugriffs-Zeitintervall (20) und die jeweiligen Slavezugriffs-Zeitintervalle (21, 22, 23) für eine eventuelle Erweiterung der Automatisierungseinrichtung mit der weiteren Slave-Einheit (13; 18) vorbereitet sind.

## Claims

1. Method for projecting and/or operating an automation device, which in a control operation includes a master unit (15) and at least one slave unit (16, 17) connectable with the master unit (15) over a bus,
- wherein during a projection phase the number of slave units (11, 12, 13; 16, 17, 18) can be projected, as a result of which
- a master access time interval (20), during which in the control operation of the automation device the master unit (15) accesses the bus for reading and/or writing, and
- for each slave unit a slave access time interval (21, 22, 23), during which in the control operation of the automation device the slave unit accesses the bus for reading and/or writing, are defined, and
- wherein in addition to the projected slave units necessary for the current control operation, at least one further slave unit (13; 18) can be projected, as a result of which the automation device for the control operation can be expanded without re-projection with the further slave unit (18),
**characterized in that** the master access time interval (20) and the respective slave access time intervals (21, 22, 23) are prepared for a possible expansion of the automation device with the further slave unit (13; 18).

2. Method according to Claim 1, **characterized in that** the number of slave units can be projected under menu control.

3. Engineering system for projecting an automation device, which in a control operation includes a master unit and at least one slave unit connectable with the master unit over a bus,
- wherein during a projection phase the type and/or number of slave units can be projected by the engineering system, as a result of which
- a master access time interval, during which in the control operation of the automation device the master unit can access the bus for reading and/or writing, and
- for each slave unit a slave access time interval (21, 22, 23), during which in the control operation of the automation device the slave unit can access the bus for reading and/or writing, are defined, and
- wherein in addition to the projected slave units necessary for the current control operation, at least one further slave unit can be projected, as a result of which the automation device for the control operation can be expanded without re-projection with the further slave unit (18),
**characterized in that** the master access time interval (20) and the respective slave access time intervals (21, 22, 23) are prepared by the engineering system for a possible expansion of the automation device with the further slave unit (13; 18).

4. Engineering system according to Claim 3, **characterized in that** the number of slave units can be projected by the engineering system under menu control.

5. Automation device, which includes a master unit and at least one slave unit connectable with the master unit over a bus,
- wherein during a projection phase the number of slave units can be projected, as a result of which
- a master access time interval (20), during which in the control operation of the automation device the master unit can access the bus for reading and/or writing, and
- for each slave unit a slave access time interval (21, 22, 23), during which in the control operation of the automation device the slave unit can access the bus for reading and/or writing, are defined, and
- wherein in addition to the projected slave units necessary for the current control operation, at least one further slave unit is projected, as a result of which the automation device for the control operation can be expanded without re-projection with the further slave unit (18),
**characterized in that** the master access time interval (20) and the respective slave access time intervals (21, 22, 23) are prepared for a possible expansion of the automation device with the further slave unit (13; 18).

## Revendications

1. Procédé de projection et/ou d'exploitation d'un dispositif d'automatisation, qui comporte dans un mode de commande une unité maître (15) et au moins une unité esclave (16, 17) pouvant être raccordée à l'unité maître (15) par un bus, procédé dans lequel
- pendant une phase de projection, le nombre des unités esclaves (11, 12, 13 ; 16, 17, 18) peut être projeté de telle sorte que
- un intervalle de temps d'accès par l'unité maître (20), pendant laquelle l'unité maître(15) accède en lecture et/ou en écriture au bus lorsque le dispositif d'automatisation est dans le mode de commande, et
- il est défini pour chaque unité esclave un intervalle de temps d'accès par l'unité esclave (21, 22, 23) pendant laquelle l'unité esclave accède en lecture et/ou en écriture au bus lorsque le dispositif d'automatisation est dans le mode de commande, et
- au moins une autre unité esclave (13; 18) peut être projetée en plus des unités esclaves projetées nécessaires au mode de commande actuel de sorte que le dispositif d'automatisation peut être élargi pour le mode de commande sans nouvelle projection avec l'autre unité esclave (18),
**caractérisé en ce que** l'intervalle de temps d'accès par l'unité maître (20) et l' intervalle de temps respective d'accès par l'unité esclave (21, 22, 23) sont préparées pour une extension éventuelle du dispositif d'automatisation avec l'autre unité esclave (13 ; 18).

2. Procédé selon la revendication 1, **caractérisé en ce que** le nombre d'unités esclaves peut être projetées par une commande par menu.

3. Système d'ingénierie destiné à projeter un dispositif d'automatisation qui comporte une unité maître et au moins une unité esclave pouvant être raccordée à l'unité maître par un bus, système d'ingénierie dans lequel
- pendant une phase de projection, le type et/ou le nombre des unités esclaves peuvent être projetées par le système d'ingénierie de telle sorte que
- un intervalle de temps d'accès par l'unité principale, pendant laquelle l'unité maître peut accéder en lecture et/ou en écriture au bus lorsque le dispositif d'automatisation est dans le mode de commande, et
- il est défini pour chaque unité esclave un intervalle de temps d'accès par l'unité esclave (21, 22, 23) pendant laquelle l'unité esclave peut accéder en lecture et/ou en écriture au bus lorsque le dispositif d'automatisation est dans mode de commande, et
- au moins une autre unité esclave peut être projetée en plus des unités esclaves projetées nécessaires au mode de commande actuel de sorte que le dispositif d'automatisation peut être élargi pour le mode de commande sans nouvelle projection avec l'autre unité esclave,
**caractérisé en ce que** l' intervalle de temps d'accès par l'unité maître(20) et l' intervalle de temps respective d'accès par l'unité esclave (21, 22, 23) sont préparées par le système d'ingénierie pour une extension éventuelle du dispositif d'automatisation avec l'autre unité esclave (13 ; 18) .

4. Système d'ingénierie selon la revendication 3, **caractérisé en ce que** le nombre d'unités esclaves peut être projeté par le système d'ingénierie par une commande par menu.

5. Système d'automatisation qui comporte dans un mode de commande une unité maître et au moins une unité esclave pouvant être raccordée à l'unité maître par un bus, système dans lequel
- pendant une phase de projection, le nombre des unités esclave peut être projeté de telle sorte que
- un intervalle de temps d'accès par l'unité maître(20), pendant laquelle l'unité maître peut accéder en lecture et/ou en écriture au bus lorsque le dispositif d'automatisation est dans le mode de commande, et
- il est défini pour chaque unité esclave un intervalle de temps d'accès par l'unité esclave (21, 22, 23) pendant laquelle l'unité esclave peut accéder en lecture et/ou en écriture au bus lorsque le dispositif d'automatisation est dans le mode de commande, et
- au moins une autre unité esclave est projetée en plus des unités esclaves projetées nécessaires au mode de commande actuel de sorte que le dispositif d'automatisation peut être élargi pour le mode de commande sans nouvelle projection avec l'autre unité esclave,
**caractérisé en ce que** l' intervalle de temps d'accès par l'unité maître(20) et l' intervalle de temps respective d'accès par l'unité esclave (21, 22, 23) sont préparées pour une extension éventuelle du dispositif d'automatisation avec l'autre unité esclave (13 ; 18).
